# EUROPEAN PATENT SPECIFICATION

(11) **EP 2 423 079 B1**
(45) Date of publication and mention of the grant of the patent: **19.03.2014**
(21) Application number: 10758086.2
(22) Date of filing: 31.03.2010
(51) Int. Cl.: C21D 9/00, B60J 5/04, F16B 37/04

(54) **ANCHORING PLATE**
VERANKERUNGSPLATTE
PLAQUE D'ANCRAGE

(30) Priority: 03.04.2009 ES 200900976
(43) Date of publication of application: 29.02.2012
(73) Proprietor: Illinois Tool Works Inc., Glenview, IL 60026 (US)
(72) Inventor: DÍEZ HERRERA, Víctor, 08203 Sabadell Barcelona (ES); ARISA BUSQUETS, Jaume, 08206 Sabadell Barcelona (ES)
(74) Representative: Canela Giménez, Teresa
(86) International application number: PCT/ES2010/000134
(87) International publication number: WO 2010/112639

(56) References cited:
- EP-A1- 2 085 130
- EP-A1- 2 085 130
- WO-A1-2004/040150
- WO-A1-2004/040150
- WO-A1-2004/040150
- ES-T3- 2 028 297
- ES-T3- 2 028 297
- ES-T3- 2 065 071
- ES-T3- 2 065 071
- ES-T3- 2 148 857
- ES-T3- 2 148 857
- US-A- 3 217 585
- US-A- 3 217 585
- US-A- 4 081 197
- US-A- 4 081 197
- US-A1- 2002 085 896
- US-A1- 2002 085 896
- US-A1- 2003 147 715
- US-A1- 2003 147 715
- US-A1- 2005 134 069
- US-B1- 6 688 680
- US-B1- 6 688 680

## Description

### FIELD OF THE INVENTION

The present invention is referring to an anchoring plate according to the preamble of claim 1, a plate of the type used for fastening motor-vehicle door slides formed by the joining of elements made of different materials and having different properties that in conjunction optimize the properties of the piece and the manufacturing costs thereof.

A anchoring plate of this type is known from US 2005/134069 A.

### PRIOR ART

Spanish patent late published No. 2356965 A develops an anchoring plate and a system for attaching it to its support plate that very advantageously obtains an adjustable fastening in different situations, as to the assembly process of the slide and as to the positions of the fastening orifices of the slide and the door, this permitting its adaptation thanks to some degree of buoyancy of the assembly attachments.

The materials used for the support plate in this type of applications are subject to constant renewal and their evolution nowadays permits the utilization, among others, of alloys and metallic compounds such as Boron Steel, which contains a small part of Boron in its chemical composition. This material is used for instance in the vehicle pillars or frame that support the door and receive the slide of same and is suitable in these applications thanks to its high resistance and little weight.

The above characteristics of high resistance and hardness of the Boron Steel material are obtained thanks to the hot stamping process itself that, in addition, features some limitations as regards the design of the support plate. Flanges, lug drilling and similar configurations are not feasible in the design of pieces manufactured with this type of material.

In view of the above, electric welding is an option worth contemplating for fastening the anchoring plate to its support, which made of said Boron Steel material.

The present invention is intended to solve this problem and as a matter of fact it permits to provide a composition anchoring plate whose constructional elements are of both different nature and manufacture, such that they become assembled and form a single assembly that permits electric spot-welding of said anchoring plate assembly to its support.

Another one of the objects sought is to provide means for adjusting the general buoyancy properties of the respective parts comprising the anchoring plate according to the present invention by reducing said buoyancy whenever it is deemed necessary up to its complete eventual elimination.

These and other advantages of the present invention will become more apparent throughout the description thereof.

### BRIEF EXPLANATION OF THE INVENTION

The present invention describes an anchoring plate of the type used as bodywork reinforcement in the fastening of motor-vehicle door slides formed by the composition of threaded parts made of materials such as thermally-treated carbon-steel which, owing to its resistance, does not accept welding without adding filler material, unlike electric spot-welding, and a base of, for instance, carbon-steel that does permit such electric spot-welding resulting from the stamping of a metal sheet, wherein it has been provided means for attaching said threaded parts to said base as well as surfaces for welding the base to the bodywork.

The anchoring plate of the invention incorporates reinforcements in the form of kinks that make the welding surface solid in spite of its featuring a high degree of independence and flexibility relative to the plate assembly.

In one of the embodiment variants the reinforcements or kinks of the nut part are accessible from the exterior so that they can be knocked down and thus brought closer to the coupling walls of the anchoring plate base with the purpose of immobilizing the nut part relative to said anchoring plate.

In this way the advantages sought have been obtained so that it can be provided an anchoring plate that incorporates nut elements suitably made for such a function, including cost and weight reduction, said advantages not being possible to be directly obtained, for instance, from the punching of the sheet forming the base.

### BRIEF EXPLANATION OF THE DRAWINGS

For a better understanding of the invention it is accompanied by two sheets of merely illustrative and non-limiting drawings.
Figure 1 is a perspective representation of an anchoring plate in accordance with the prior art.
Figure 2 shows a bottom view, opposed to the previous one, of a partial detail of the anchoring plate of the preceding figure.
Figures 3, 4, 5 and 6 respectively show elevational, plan and sectional views of the anchoring plate of the preceding figures.
Figure 7 is a perspective representation of another possible embodiment of the invention.
Figure 8 shows a perspective view of another possible embodiment of the invention.
Figures 9 and 10 show elevational views of the embodiment of the previous figure.
Figure 11 is a perspective representation of another embodiment, different from the previous ones, of the present invention.
Figures 12 and 13 also show other prior art arrangements.

### DETAILED EXPLANATION OF THE INVENTION

The invention consists in an anchoring plate of the type used as bodywork reinforcement in the fastening of motor-vehicle door slides, said anchoring plate being formed by the setting-up of a base cage part (1) made of, for instance, carbon steel, and nut parts (2) made of, for instance, thermally-treated carbon steel, said base (1) being provided with tongues or kinks (5) for fastening said nut parts (2).

The nut parts (2) are thermally-treated to both obtain a hardness of, for instance, HRC 45-50 and to obtain a high tightening torque. Conversely, the base (1) is not thermally-treated and permits, among other options, electric spot-welding to the sheet or bodywork reinforcement.

Said nuts are provided with a vault (4) at the base of a threaded tube (3). As viewed from the insertion portion of the fixing screw, said construction offers a rounded entry (9) that facilitates the alignment of said screw during the tightening operation of the anchoring plate.

The nut parts (2) can be made in various configurations, as will be understood from the embodiments appearing in this description, and can be combined with various configurations of the base cage (1), bearing in mind that they are independent of each other in accordance with the present invention.

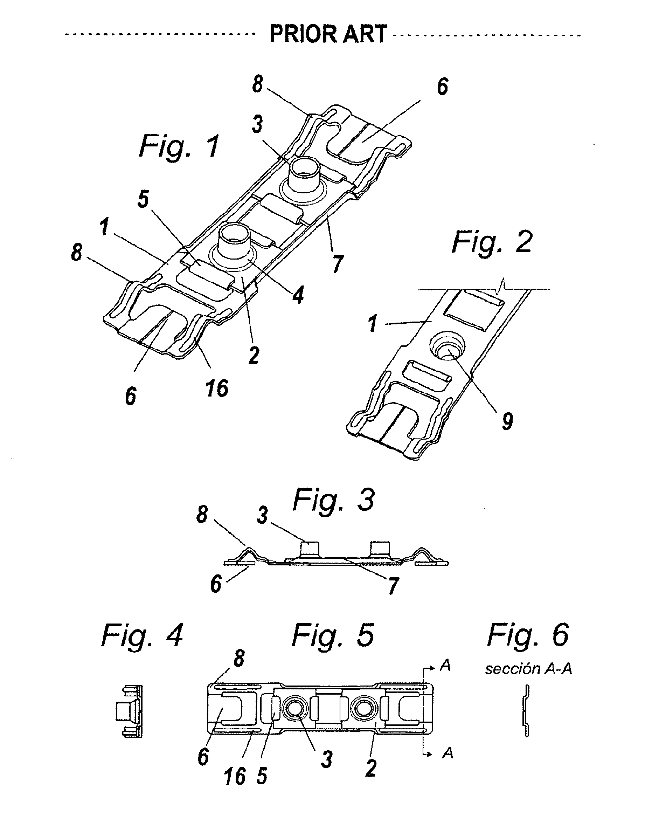

In one prior art arrangement, shown in figures 1 to 6, the base (1) has an overall shape that is approximately rectangular in shape and incorporates two elements or nut parts (2), albeit other setting-up configurations can be provided with a different number of nuts (2), if deemed appropriate.

In the possible embodiments of the base cage (1) other materials are used among those having a high elastic limit like, for instance, carbon steel with a "Re" elastic limit of 500 to 650 N/mm² and an Rm of 800 to 950 N/mm² which also allow electric welding and avoid the need for thermal treatment, this hence improving resistance and solidity performances with respect to conventional carbon steel.

The base (1) is provided with various elements for structural reinforcement. Specifically and in the arrangement shown in the drawings, a lateral reinforcement (7) and a reinforced bridge or joining arms (8), said arms (8) can feature structural reinforcements (6), as shown in figures 1 to 6.

Said reinforced bridge (8) joins the main body of the base (1) and a surface or welding lug (6) with a high degree of independence and flexibility. Such bridge (8) is made in the shape of an inverted "V" with the ends thereof facing the base (1) of the anchoring plate.

Additionally, said reinforced bridges (8) permit some longitudinal and transverse buoyancy of the piece, which is necessary for a correct adjustment of the slide during the assembly operation.

With the above-described arrangement it is possible to obtain weight reductions of the overall piece ranging between about 20% and 25% with respect to the configuration of a single piece formed by punching of the metal base.

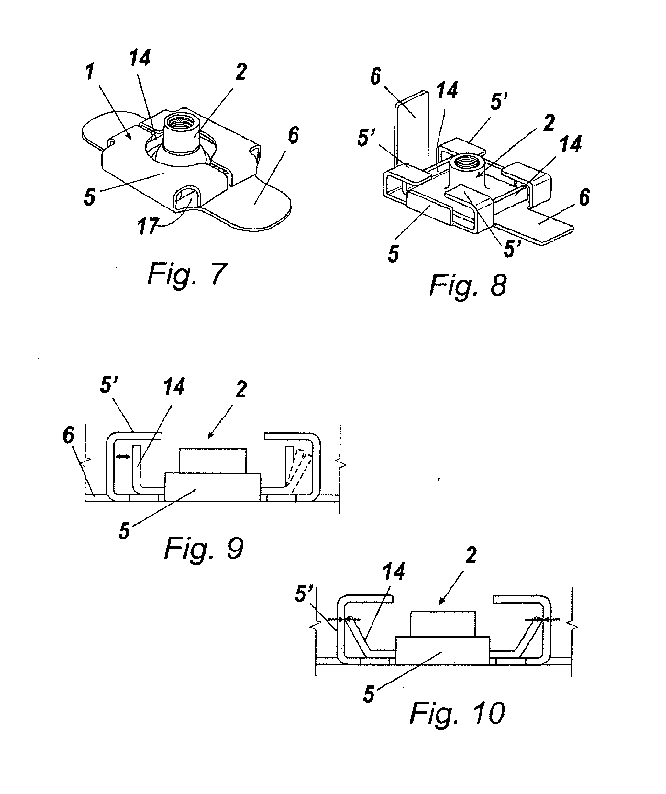

Within the scope of the invention, figure 7 shows a single threaded part (2) that is surrounded by a base cage (1) by means of two lateral flaps of same, fastening kinks (5), that almost completely enclose the base surface of said nut part (2). Said nut part (2) is fitted into folds (17) provided in said base (1) and features lateral reinforcements (14), for instance in the form of straight bends. It is provided with two welding lugs (6) placed at either end of the longitudinal axis of the base (1).

The threaded part (2) has some longitudinal and horizontal buoyancy relative to its fastening by said base cage (1).

The embodiment of figures 8 to 10 represents a variant of the previous construction, albeit its principle is applicable to other embodiments. The threaded part (2) is initially also provided with some longitudinal and horizontal buoyancy relative to its fastening in said base cage (1). Although here the kinks (5) of said base (1) are bends to fit the nut part (2) into said base (1).

The lateral reinforcements (14) of said nut part (2) face with some clearance other kinks similar to arms (5') that partially superpose each other relative to said nut part (2). As shown in the succession of figures 9 and 10, said lateral reinforcements (14) of said nut part (2) can be knocked down thus reducing their clearance relative to said arms (5'), thus reducing with this action buoyancy in that direction between the nut part (2) and said base (1).

This operation can be performed at any suitable time both during the assembly process and during the manufacture of the anchoring plate, if deemed necessary, thanks to the fact that the partial superposition of said arms (5') onto the nut part (2) permits the utilization of a tool to knock down said lateral reinforcements (14) in the desired proportion.

In this embodiment both welding lugs (6) provided at either end of the longitudinal axis of the base (1) can be arranged in different angles with respect to said base (1) thus becoming adapted to the different contexts of use without losing any generality.

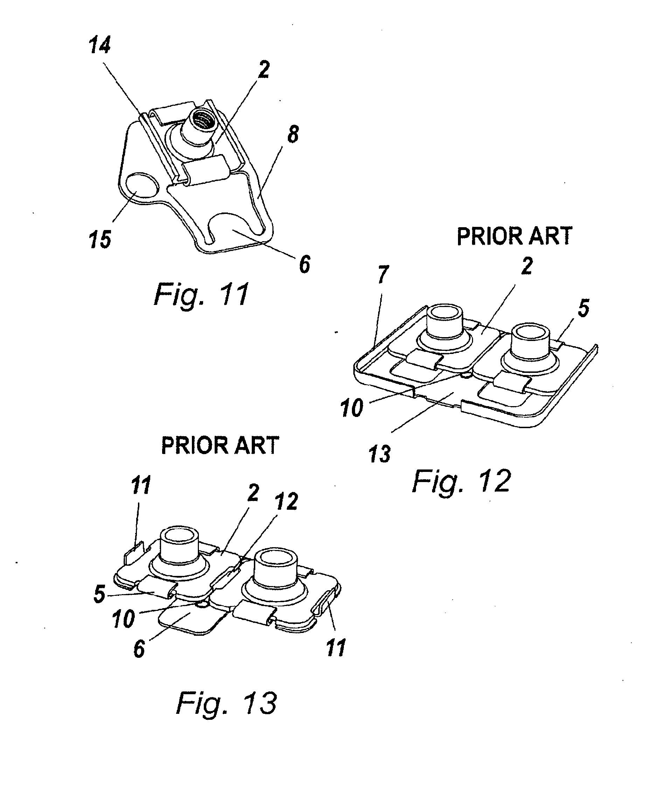

Another one of the possible embodiments of the present invention is represented in figure 11. There also exists here a single nut part (2) and a single surface or welding lug (6) that is attached to the surface of the base cage (1) by way of joining arms. The nut part (2) has some range of movement relative to the fastening thereof performed by the base cage (1).

This embodiment includes on said surface of the base cage (1), along one of the sides thereof, one annular orifice (15) similar to a "poka-yoke" (fail-safe device) that breaks the symmetry of the piece and prevents its erroneous assembly. Both sides of the base surface of said nut parts (2), the sides that are not subject to the fastening of the base cage (1), feature lateral reinforcements (14) in the form of elbowed folds, for instance, that provide it with more structural rigidity.

Figure 12 represents a prior art arrangement with the peculiarity that the base surface (1) features positioning protuberances (10) that contribute to the centering and placement onto said base (1) of the threaded parts (2) that have, as shown, an approximately square base surface. In this arrangement there exists longitudinal and transverse buoyancy in the plane of the base cage (1) of said threaded parts (2).

The base surface (1) has lateral reinforcements (7) that provide it with more structural rigidity and act as limits to the buoyancy of the nut parts (2). There is provided a welding area (13) that is located approximately at a central zone of said base (1) and is laterally displaced relative to the longitudinal axis of the nut parts (2).

The prior art arrangement shown in figure 13 includes nut parts (2) that are similar to the ones of the previous arrangement and feature notches (12) located at the central portion of the sides thereof. These nut parts (2) are contained within a base cage (1) that is also provided with two positioning protuberances (10) and bends in the form of lateral butts (11) at the longitudinal axis both of the base cage (1) and the nut parts (2).

The welding lug (6) extends in the arrangement in transverse direction relative to said longer longitudinal axis of the cage base (1) and approximately from its central portion.

This arrangement permits longitudinal and transverse buoyancy of the threaded parts (2), said buoyancy being independent for every threaded part (2). The above-mentioned lateral butts limit movement of said threaded parts (2).

Among the advantages obtained with the invention in any of its embodiments is the high tightening torque that can reached thanks to the use of nut parts (2) made of materials that, once treated with the specific procedures required for each case, obtain the properties of hardness, weight and elasticity required in the application. They are now of possible utilization for forming anchoring plates thanks to the present invention that makes it possible for said plates to be made of independent parts and to have different properties, even in respect of a welding process.

The vault (3) of said nut parts (2) is designed to provide elastic reserve which enables the increase of the nut's tightening torque.

Lastly, thanks to the constructional achievement that represents the present invention, it is obtained high levels of standardization from individual nuts (2), this permitting the design of anchoring plates featuring different distances between centers by using the same nut (2) for a given thread size.

It is understood that finish or shape details in the present case are liable to variation provided that the invention is not altered beyond the scope defined by the appended claims.

## Claims

1. ANCHORING PLATE, of the type used as bodywork reinforcement in the fastening of motor-vehicle door slides, which has a base surface that incorporates at least one nut for the passage of fastening screws, said anchoring plate being formed by the setting-up of a spot-weldable metal base cage part (1) and, independent of said base part (1), one or several also metal nut parts (2); said base part (1) being provided with fastening kinks (55') that surround said nut parts (2); said nut parts (2) being capable of featuring horizontal and/or vertical mobility in the plane of said base surface ; said base part (1) being provided with at least one welding surface or fastening surface (6) ; said nut parts (2) each having at the base of a threaded tube (3) a vault (4) that provides elastic reserve in the tightening operation of said nut (2), whereby
each of said nut parts (2) is provided with lateral reinforcements (14), for instance in the form of elbowed folds; and
said lateral reinforcements (14) of the nut part (2) face with clearance some kinks (5,5') located at said base part (1), the anchoring plate being **characterised in that** said lateral reinforcements (14) are collapsible in the direction of said base (1) in order to reduce said clearance between said kinks (5, 5') of said base part (1) and said lateral reinforcements (14).

2. ANCHORING PLATE, according to the previous claims, **CHARACTERIZED in that** in said base cage (1) it is used carbon steel with an "Re" elastic limit ranging between about 500 to 650 N/mm² and an "Rm" ranging between about 800 to 950 N/mm² that enables electric welding.

3. ANCHORING PLATE, according to the previous claim, **CHARACTERIZED in that** said arms (5') partially superpose each other to said nut part (2), thus permitting the action of a tool on said lateral reinforcements (14).

4. ANCHORING PLATE, according to the previous claim, **CHARACTERIZED in that** the kinks (5) of the base part (1) are bends into which to fit said nut parts (2).

5. ANCHORING PLATE, according to the previous claims, **CHARACTERIZED in that** it is formed by a single unit that combines a single nut part (2) and a base part (1).

6. ANCHORING PLATE, according to the previous claims, **CHARACTERIZED in that** said base part (1) is provided with two welding surfaces (6) that extend from the sides thereof in the longitudinal direction, it being possible for said two welding surfaces (6) to be arranged at different angles relative to said base (1).

7. ANCHORING PLATE, according to the previous claims, **CHARACTERIZED in that** said fastening or welding surface (6) is arranged transversally relative to the longitudinal axis of said base part (1), approximately in the central zone thereof.

8. ANCHORING PLATE, according to the previous claims, **CHARACTERIZED in that** said fastening or welding surfaces (6) are joined to said base cage (1) by way of joining arms (8) that establish a bonding having a high degree of independence and flexibility between the main body of said base part (1) and said surfaces (6), said arms (8) having optional structural reinforcements (17).

9. ANCHORING PLATE, according to the previous claim, **CHARACTERIZED in that** said arms (8) form a bridge in the shape of an inverted "V" whose ends face said base part (1) of the anchoring plate.

10. ANCHORING PLATE, according to the previous claims, **CHARACTERIZED in that** said base cage part (1) interlocks two opposed sides of each of said nut parts (2) by means of respective kinks (5) of said base cage (1), said fastening kinks (5) covering approximately an entire flat surface of said nut parts (2) like a shell.

## Patentansprüche

1. VERANKERUNGSPLATTE des Typs, der als Karrosserieverstärkung bei der Befestigung Kraftfahrzeug-Türschiebern benutzt wird, die eine Grundfläche besitzt, die mindestens eine Mutter für das Durchführen von Befestigungsschrauben umfasst, wobei die besagte Verankerungsplatte durch den Aufbau eines punktschweißfähigen Metallbasiskäfigteil (1) und, unabhängig von besagtem Basisteil (1), einem oder mehreren Metallmutterteilen (2) gebildet wird; das besagte Basisteil (1) ist mit Befestigungsknicken (5,5') versehen, die die besagten Mutternteile (2) umgeben; die besagten Mutternteile (2) sind in der Lage, horizontale und/oder vertikale Beweglichkeit in der Ebene der besagten Basisoberfläche aufzuweisen; das besagte Basisteil (1) besitzt mindestens eine Schweißoberfläche oder Befestigungsoberfläche (6); die besagten Mutternteile (2) besitzen jeweils an der Basis eines Gewinderohrs (3) eine Wölbung (4), die elastische Reserve beim Anziehen der besagten Mutter (2) liefert, wobei jedes der besagten Mutternteile (2) mit seitlichen Verstärkungen (14) versehen ist, zum Beispiel in der Form abgewinkelter Faltungen, und besagte seitliche Verstärkung (14) des Mutternteils (2) liegen mit Abstand gegenüber einigen Knicken (5.5') am besagten Basisteil (1), wobei sich die Verankerungsplatte dadurch auszeichnet, dass die besagten seitlichen Verstärkungen (14) in Richtung des besagten Basisteils (1) klappbar sind, um den besagten Abstand zwischen den besagten Knicken (5.5') des besagten Basisteils (1) und den besagten seitlichen Verstärkungen (14) zu reduzieren.

2. VERANKERUNGSPLATTE gemäß den vorstehenden Ansprüchen, DIE SICH DADURCH AUSZEICHNET, dass für den besagten Basiskäfig (1) Kohlenstoffstahl mit einem "Re" elastischem Grenzwert zwischen circa 500 bis 650 N/mm² und einem "Rm" zwischen circa 800 bis 950 N/mm² benutzt wird, was Elektroschweißen erlaubt.

3. VERANKERUNGSPLATTE gemäß den vorstehenden Ansprüchen, DIE SICH DADURCH AUSZEICHNET, dass sich besagte Arme (5') teilweise zu besagtem Mutternteil (2) überlagern und somit die Aktion eines Werkzeugs an den besagten seitlichen Verstärkungen (14) erlauben.

4. VERANKERUNGSPLATTE gemäß den vorstehenden Ansprüchen, DIE SICH DADURCH AUSZEICHNET, dass die Knicke (5) des besagten Basisteils (1) Bögen passend zu den besagten Mutternteilen (2) sind.

5. VERANKERUNGSPLATTE gemäß den vorstehenden Ansprüchen, DIE SICH DADURCH AUSZEICHNET, dass sie durch eine einzelne Einheit gebildet wird, die ein einzelnes Mutternteil (2) und ein Basisteil (1) vereint.

6. VERANKERUNGSPLATTE gemäß den vorstehenden Ansprüchen, DIE SICH DADURCH AUSZEICHNET, dass das besagte Basisteil (1) über zwei Schweißflächen (6) verfügt, die sich von den Seiten in Längsrichtung erstrecken, und dass es möglich ist, die zwei Schweißflächen (6) in unterschiedlichen Winkeln in Bezug auf das besagte Basisteil (1) anzuordnen.

7. VERANKERUNGSPLATTE gemäß den vorstehenden Ansprüchen, DIE SICH DADURCH AUSZEICHNET, dass die besagten Befestigungs- oder Schweißflächen (6) ungefähr im Mittelbereich quer zur Längsachse des besagten Basiskäfigs (1) angeordnet sind.

8. VERANKERUNGSPLATTE gemäß den vorstehenden Ansprüchen, DIE SICH DADURCH AUSZEICHNET, dass die besagten Befestigungs- oder Schweißflächen (6) mittels Verbindungsarmen (8) mit dem besagten Basiskäfig (1) verbunden sind, die eine Verbindung mit einem hohen Grad an Unabhängigkeit und Flexibilität zwischen dem Hauptkörper des besagten Basisteils (1) und den besagten Flächen (6) liefert, wobei die besagten Arme (8) optionale strukturelle Verstärkungen (17) besitzen.

9. VERANKERUNGSPLATTE gemäß den vorstehenden Ansprüchen, DIE SICH DADURCH AUSZEICHNET, dass die besagten Arme (8) eine Brücke in Form eines umgedrehten "V" bilden, deren Enden gegenüber den dem besagten Basisteil (1) der Verankerungsplatte liegen.

10. VERANKERUNGSPLATTE gemäß den vorstehenden Ansprüchen, DIE SICH DADURCH AUSZEICHNET, dass das besagte Käfigteil (1) zwei gegenüberliegende Seiten jedes der besagten Mutternteile (2) mittels jeweiligen Knicken (5) des besagten Basiskäfigs (1) verriegelt, wobei die besagten Befestigungsknicke (5) ungefähr eine vollständige flache Oberfläche der besagten Mutternteile (2) wie eine Muschel abdecken.

## Revendications

1. PLAQUE D'ANCRAGE du type utilisé comme renfort de carrosserie dans la fixation de coulisses pour porte d'un véhicule automobile, qui possède une surface de base comprenant au moins un écrou pour le passage de vis de serrage ; cette plaque d'ancrage se constitue d'un support (1) métallique soudé par points et d'un ou de plusieurs écrous (2) également métalliques qui sont indépendants de ce support (1) ; ce support (1) présente des pattes de fixation (5, 5') entourant ces écrous (2) ; ces écrous (2) peuvent assurer la mobilité horizontale et/ou verticale dans le plan de cette surface de base ; ce support (1) est muni au moins d'une surface de soudure ou d'une surface de fixation (6) ; chaque écrou (2) possède à la base d'un tube fileté (3) une voûte (4) qui fournit une réserve élastique dans l'opération de serrage de l'écrou (2), sachant que chaque écrou (2) est muni de renforts latéraux (14), par exemple sous forme de plis coudés, et que ces renforts latéraux (14) de l'écrou (2) sont situés, moyennant un certain espace libre, en face de ces pattes (5, 5') situées sur le support (1) ; la plaque d'ancrage se **caractérise par le fait que** ces renforts latéraux (14) peuvent être pliés dans la direction du support (1) pour réduire l'espace libre existant entre les pattes (5, 5') du support (1) et les renforts latéraux (14).

2. Conformément aux revendications indiquées plus haut, la PLAQUE D'ANCRAGE se **caractérise par** l'utilisation pour le support (1) d'un acier au carbone possédant une limite élastique « Re » comprise entre environ 500 et 650 N/mm² et un « Rm » compris entre environ 800 et 950 N/mm² qui supporte le soudage électrique.

3. Conformément aux revendications précédentes, la PLAQUE D'ANCRAGE se **caractérise par le fait que** les pattes (5') recouvrent en partie l'écrou (2), permettant ainsi l'actionnement d'un outil sur les renforts latéraux (14).

4. Conformément aux revendications précédentes, la PLAQUE D'ANCRAGE se **caractérise par le fait que** les pattes (5) du support (1) sont des courbures qui doivent recevoir les écrous (2).

5. Conformément aux revendications précédentes, la PLAQUE D'ANCRAGE se **caractérise par le fait qu'**elle est formée par une seule pièce qui combine un seul écrou (2) et un support (1).

6. Conformément aux revendications précédentes, la PLAQUE D'ANCRAGE se **caractérise par le fait que** le support (1) compte deux surfaces de soudure (6) qui s'étendent en longueur à partir de ses côtés et qui peuvent être disposées dans des angles différents par rapport à ce support (1).

7. Conformément aux revendications précédentes, la PLAQUE D'ANCRAGE se **caractérise par le fait que** cette surface de fixation ou de soudure (6) est disposée transversalement à l'axe longitudinal du support (1) approximativement dans la zone centrale de ce dernier.

8. Conformément aux revendications précédentes, la PLAQUE D'ANCRAGE se **caractérise par le fait que** les surfaces de fixation ou de soudure (6) sont unies au support (1) à l'aide de bras d'union (8) qui établissent une connexion très indépendante et très flexible entre le corps principal du support (1) et ces surfaces (6), tandis que ces bras (8) disposent de renforts structurels (17) en option.

9. Conformément aux revendications précédentes, la PLAQUE D'ANCRAGE se **caractérise par le fait que** ces bras (8) forment un pont en forme de « V » inversé dont les extrémités font face au support (1) de la plaque d'ancrage.

10. Conformément aux revendications précédentes, la PLAQUE D'ANCRAGE se **caractérise par le fait que** le support (1) bloque deux faces opposées de chaque écrou (2) à l'aide des pattes correspondantes (5) du support (1) sachant que ces pattes de fixation (5) couvrent environ une surface plane entière de ces écrous (2) comme s'il s'agissait d'une coquille.
